# EUROPEAN PATENT SPECIFICATION

(11) **EP 2 482 101 B1**
(45) Date of publication and mention of the grant of the patent: **15.01.2014**
(21) Application number: 12153270.9
(22) Date of filing: 31.01.2012
(51) Int. Cl.: G01T 1/164

(54) **A focused pinhole gamma detection device**
Gamma-Detektionsvorrichtung mit gerichteter Lochblende
Dispositif de détection gamma de type sténopéique focalisé

(30) Priority: 31.01.2011 NL 2006107
(43) Date of publication of application: 01.08.2012
(73) Proprietor: Milabs B.V., 3584 CX Utrecht (NL)
(72) Inventor: Beekman, Frederik Johannes, 3584 CG Utrecht (NL)
(74) Representative: Brookhuis, Hendrik Jan Arnold

(56) References cited:
- EP-A1- 2 073 039
- WO-A2-2007/043868
- US-A- 3 840 747
- US-A1- 2004 232 348

## Description

The present invention relates to a focused pinhole gamma detection device.

Focused pinhole gamma detection devices are amongst others used for small animal imaging for biomedical research, but also for other purposes such as clinical imaging and non-destructive testing.

A known focused pinhole gamma detection device according to the preamble of claim 1 is described in EP2073039.

The known device has a collimator with a plurality of pinhole systems, each system having a plurality of pinholes, which pinhole systems are all focused, i.e. they all point toward the focus volume, or central field of view (CFOV).

A problem with this known device is that it is still rather bulky, when trying to achieve good resolution/magnification and a good sensitivity. Also such a bulky device is very heavy, due to the large parts of dense metal that are required. Thereby it is e.g. difficult to handle the device, such as for rotating it in order to obtain sufficient angular information. All this makes the device insufficiently flexible in use.

Furthermore, US 2004/0232348 discloses a pinhole detection device with a blocking wall to limit image overlap on the detector.

It is an object of the present invention to provide a device according to the preamble, that has an improved flexibility in use but not at the cost of the compactness of the device.

This object is achieved with a device according to claim 1, which is characterized in that the detection device further comprises a pinhole shutter device with a control unit and that is constructed and arranged to selectively switch a transmission state of at least one pinhole of at least one pinhole system between an open state and a closed state under the control of the control unit. The device according to the present invention achieves the object in that being able to selectively open and close a pinhole allows to mimic a lot of functionalities of bigger and possibly rotatable devices. All this versatility is still achieved with a possibly very compact design with a high (possible) magnification and high sensitivity. This will be elucidated further below. Note that the control unit may be a manually operated lever or the like, but preferably comprises a computer control, such as an electronically controlled actuator for the pinhole shutter.

In favourable embodiments, the total opening angle of at least one, and preferably of all, pinhole systems is more than 50°, in particular more than 60°, more in particular between 80° and 120°, and yet more in particular between 90° and 120°. Such large opening angles allow the pinhole systems to be positioned very close to the object, and result in a very large CFOV. This in turn allows for a quick scan of the larger part of an object in the object space, without having to turn the collimator, e.g. in a tubular or cilindrical collimator about a central axis of rotation. Furthermore, resolution and sensitivity are also improved at shorter distances to the object. Also, the smaller dimensions lead to less material for the collimator, or, if magnification is not a great issue, a smaller detector. It is noted that it is of course also possible to take (much) smaller total opening angles, such as between 5 and 45°. An advantage thereof is e.g. that edge penetration becomes smaller, which is an issue for high energy quanta, such as the 511 keV adiation.

It is noted that, in embodiments, at least two, and preferably all, neighbouring pinhole systems have respective pinhole system fields of view that provide images that overlap on the detector at least 10%, preferably between about 25% and 75%. Note that the number of "at least 10%" can be said to relate to a "non-negligible overlap", i.e. any overlap that would usually hinder image reconstruction. Such overlap is usually undesirable, as it makes measurements ambiguous. For each detected photon could have been transmitted by two or more pinholes. However, the shutter device according to the present invention can be put to use in selectively opening and closing of pinholes such that such overlap is no longer present. For example, in expedient embodiments, the pinhole shutter device is arranged to selectively switch a transmission state of all pinholes of at least one pinhole system between an open state and a closed state. This allows e.g. the use of a first set of open pinhole systems with first angular positions relative to the object, in order to obtain first images, followed by switching the open state of these open pinhole systems to a closed state and switching all or part of the previously closed pinhole systems, being in other, second angular positions, from the closed state to the open state and obtaining second images. Even more expediently, the pinhole shutter device is arranged to selectively switch a transmission state of one or more preselected, in particular all, pinholes of a plurality of pinhole systems between an open state and a closed state, preferably such that pinhole system fields of view of neighbouring pinhole systems are non-overlapping on the detector. If possible with respect to the number of pinhole systems, and if useful with respect to the image overlap, it is possible to take third images with yet other open pinhole systems, preferably at yet another, third angular positions, and so on. Thus, according to the present invention, it is possible to use cluster pinhole systems, having a very good image quality due to low edge penetration, with a large opening angle and thus a large CFOV, a large possible magnification/resolution and a high sensitivity, yet with sufficient angular information, because it is possible to select pinhole systems, to prevent overlapping images.
Note that it is possible, though not necessary, that all pinhole systems in the device are constructed and arranged so as to establish a common overlap of their pinhole system fields of view, said overlap defining a focus volume, that is seen by all those pinhole systems of the device. It is however conceivable to use e.g. two separate focus volumes, or a focus volume in which not only individual pinholes in apinhole system have different fields of view, but in which the system fields of view of the pinhole systems are also spread through the object space, such that there is no true intended overlap of all system fields of view. An example could be system fields of view that are arranged like the stems in a bunch of flowers. Such a volume could be called an 'ordinary volume', in which there is likely an overlap between two or a few pinhole (system) fields of view, but not between all active pinholes/pinhole systems. However, image reconstruction greatly benefits from a single common field of view/focus volume. Note that a subset of pinholes of all the pinhole systems, or of a subset thereof, need not have the same (partial) focus volume.

It is pointed out that in the above, as well as in all what follows, the concept of focus volume, volume seen by pinholes/pinhole systems, etcetera, always relates to the respective fields of view of only the open pinholes, as it does not make sense to include a field of view from a closed pinhole.

In embodiments, the pinhole shutter device is arranged to selectively switch a transmission state of one or more preselected pinholes of a plurality of pinhole systems between an open state and a closed state, preferably such that pinhole system fields of view of neighbouring pinhole systems are at most 20% overlapping in area, preferably at most 10% overlapping in area, more preferably non-overlapping on the detector after the switch. With this measure, it is possible to have generally overlapping images on the detector when all pinholes of all pinhole systems are in an open state, while after switching the state of the preselected pinholes the images are overlapping to at most a still acceptable degree of 20% in area, preferably at most to a useful degree of 10% in area, and more in particular no longer overlap, to prevent ambiguities when reconstructing the image of the object under examination. In this way, one is able to select a plurality of different set-ups for the focus volumes, or at least the fields of view, and one can "scan" through an object without having to move either the object or the collimator. Note that it is advantageous to use as much of the detector area as possible.

In embodiments, the shutter device is arranged to selectively switch a transmission state of at least one pinhole of each of the pinhole systems between an open state and a closed state, such that the pinhole system fields of view of all pinholes that are in the open state after said switch together form a predetermined selected partial focus volume, that is smaller than the focus volume of all pinhole systems together in an open state.

In a useful embodiment, each pinhole system comprises a first set of pinholes and a second set of pinholes, wherein the pinholes of the first sets of the pinhole systems define a first focus volume and the pinholes of the second sets of the pinhole systems define a second volume, in particular a second focus volume, wherein the pinhole shutter device is arranged to selectively switch between a first state, in which the pinholes of the first sets are open, and in which the pinholes of the second sets that are not in the first sets are closed, and a second state, in which the pinholes that are in the second sets are open, and in which the pinholes of the first sets that are not in the second sets are closed. In such embodiments, there are two, or more, basic volumes, selectable by bringing the corresponding pinholes in each pinhole system into an open state, closing off the other pinholes. One is thus able to select for example a region of interest, such as the midbrain, for specific examination with a longer duration, while also able to select a surrounding region, such as the left part of the brain or all of the head, in order to obtain full angular information about the region of interest. Vice versa, one is able to make a so-called scout scan of e.g. an abdomen or head, to determine the true region of interest, such as the rough location of a tumor, followed by selecting those (sets of) pinholes that will provide a more specific image of that location with the tumor. This allows more precise imaging, with less radiation load, without having to move the object or the collimator. Note that the first focus volume and the second focus volume may overlap. Note in particular also that there may also be only one focus volume, the other volume not being a focus volume. That is, here the first focus volume is the only true focus volume seen by all pinhole systems, while the second volume is a volume that is built up of the fields of view of various pinhole systems that need not all overlap. For example, there could be a true focus volume only for the first set of pinholes or the second set of pinholes, while the pinhole system fields of view in the other state, i.e. for the second set of pinholes or the first set of pinholes, respectively, need not define a true focus volume. In that latter case, i.e. no true focus volume, the combined fields of view simply "see" a volume with little or no volume that is seen by all the different pinhole systems. One is thus able to image e.g. a larger volume, for example if said volume is to be scanned quickly without requiring too much detail. A useful example is a prescan to determine a region of interest. Of course, it is also possible that the second volume is also a focus volume. Then, the first focus volume and the second volume may be different, either overlapping or not. This serves to provide image information about different parts of the object. It is also possible that the first focus volume and the second focus volume are substantially identical, the only difference being that this focus volume is being seen from different pinholes in the two sets of pinholes. This offers the advantage of giving additional angle information. This may be advantageous e.g. if imaging of the focus volume with the two sets at the same time would give too much overlap on the detector.

A very useful example is characterised in that the control unit is arranged to switch the pinhole shutter device repeatedly between the first state and the second state with a predetermined frequency or with a predetermined timed sequence. This embodiment makes it possible to obtain a series of images for two (or more) different regions of the object as a function of time, or in other words, two movies for those two (or more) different regions. This is useful for examining a time development or otherwise dynamic behavior of the object, such as a marker distribution therein. The present invention allows to do so for two different regions simultaneously, without having to move the object or the collimator, which is a very big advantage.

It is possible that the first and second set of at least one pinhole system, and preferably all pinhole systems, are mutually exclusive. In such a case, the different states of the detection device are clearly defined and separate, and each pinhole system may be designed optimally for its specific field of view. However, it is of course also possible that one or more pinholes in one or more pinhole systems are part of both the first and the second set.

In embodiments, the control unit is arranged to switch between having the first state during a first time duration and having the second state during a second time duration, wherein the rate of the first time duration and the second time duration is user-definable. This allows the user to define for how long the detection device is to image the object in each of the states. In turn, the user is thus allowed to select a region for which more, such as more accurate, information is desired, while another region requires much less accurate information. For example, the first state relates to a scout scan to scan the object in order to determine a region of interest, while the second state relates to the true scan that should be set to acquire accurate information. Doing so makes it possible to lower the radiation load for the object.

Advantageously, the control unit is arranged to record detector image information obtained in the detector either together with state information for determining whether the recorded detector image information was recorded during the first state or the second state, or together with transmission state information of all switchable pinholes for determining the state of each of the switchable pinholes during recording of the recorded detector image information. This allows the images as recorded for different states of the pinholes to be effectively coupled to the correct state of the pinholes or pinhole systems. For each of the different states will correspond to a different matrix for image reconstruction. When, after imaging, the marker distribution is to be reconstructed, the combination of, in each case, the recorded image/photons and the state of the pinholes is required to apply the correct matrix to the relevant detector image, or data recorded by the detectors. Also, the relative duration of the various states may be used to correct with a corresponding weighting factor, for a longer imaging time will give a larger photon count. It will also suffice to record for each photon counted the time of counting, as well as the times of switching to a specific state, in order to reconstruct the above described information. For reconstructing a distribution D from data from a detector, one can use a matrix, that typically consists of a set of numbers Mij. Each of the numbers Mij represents the probability that a photon emitted from a volume element i is detected in a detector bin j. Other models of gamma ray transport and detection than a matrix can be used instead.

In useful embodiments, each pinhole system comprises at least two different second sets of pinholes. This relates to the situation that there are in total at least three different sets, or states, and thus at least three different regions to be images. Of course, any other, higher number such as 4, 5, ..., is also comprised. It will be clear that this further improves the flexibility of the detector device. Another important embodiment relates to having a set of various configurations of the pinhole systems. For each configuration, the pinholes in each of the pinhole systems have a certain predetermined transmission state. The simplest example is of a two-system detection device, in which each pinhole system has two pinholes. Each of the, in all, four pinholes can be in a closed state or an open state, thus providing in total 16 states for the total system, each with a corresponding (total) matrix. Of course, in practice the matrix elements will be (almost) independent, but for the total system, there can be 16 different matrices. Needless to say, for a larger number of pinhole systems and/or pinholes per system, the total number of matrix elements and of possible matrices increases very quickly.

The pinhole shutter device may comprise one or more gamma-impervious bodies, e.g. embodied as a series of rings along the length of a cilindrical or tubular collimator or embodied as plates or the like, with said bodies having one or more openings therein, said bodies being mounted close to, preferably directly adjacent, the collimator. This is possible on either side of the collimator, that is on the side of the object space or the side of the detector. For example a series of gamma-impervious rings is mounted around the outside of a cilindrical collimator or within a cilindrical collimator. Controlled positioning of such bodies, preferably each body independently controllable, and in particular of course their openings, by controlled rotating or the like, may then switch the transmission state of the pinholes or pinhole systems depending on whether or not an opening of the shutter device is present in front of/behind said pinhole (system). Alternatively or additionally, the pinhole shutter device comprises a sheet or plate arranged to be movable under the control of the control unit and having a plurality of holes in a predefined pattern to block preselected pinholes, in particular the first sets or the second sets according to claim 6, preferably wherein the movable sheet is provided within and/or behind the collimator, preferably positioned at a narrowest part of the pinholes. By providing such a pinhole shutter device, the switching of the transmission state of a plurality of pinholes can be performed simultaneously. Furthermore, they can be made compact, and fast switching is easy. This not only prevents space problems, but also allows making temporally resolved images more easily. Alternatively or additionally, at least one pinhole of each pinhole system, and in particular each pinhole or pinhole system, comprises a separate shutter body, preferably positioned in and/or behind the pinhole or pinhole system, such as a small gamma-impervious block or plug that may be positioned in or in front of the pinhole or pinhole system. This allows more flexibility for switching different pinholes, and is also very compact and very fast. In all these cases, although there are moving parts, the movement thereof is less critical than the movement of the pinholes with respect to the detector, since the latter may require recalibration if not extremely accurately controlled. Therefore, although for example a rotatable ring or series of rings with openings may, although need not, be much lighter than a collimator, positioning such a ring or rings is much easier and avoids frequent recalibration or a very precise collimator control. It can also be very much faster than moving a heavy collimator or even the bed with the object to be examined. This allows a very quick switching of the position of focus volume, thus allowing e.g. making "movies", i.e. monitoring the development over time of the image.

In embodiments of the detection device at least one pinhole of each pinhole system, and in particular each pinhole or pinhole system, comprises a separate shutter, preferably positioned in and/or behind the pinhole or pinhole system.

In embodiments, operation of the shutter device may be manual or computer controlled. Note that prior art so-called "framing plates", as described in e.g. W02007/043868, are sometimes used to change the size and/or position of an image field, but the selective opening or closing of a pinhole, i.e. selectively blocking radiation therethrough, is not disclosed in W02007/043868 . Also, the advantages as proposed in the present invention are not suggested therein.

The present invention allows for additional advantages. For example, in embodiments, the pinhole shutter device is arranged to selectively switch a transmission state of at least one pinhole of each of the pinhole systems between an open state and a closed state, such that the pinhole system fields of view of all pinholes that are in the open state after said switch together form a predetermined selected partial focus volume, that is smaller than the focus volume of all pinhole systems together in an open state. These embodiments use the circumstance that the device has pinhole systems each comprising a plurality of pinholes. These pinholes within a pinhole system all point in different directions. Thus, each pinhole has its own field of view. Therefore, in order to accentuate only a part of the total CFOV, one can select the specific pinholes of all pinhole systems that actually "see" that part of the CFOV, and closing the other pinholes. Herein, it may be advantageous to form two or more separate images, if two or more pinholes would provide overlapping images on the detector. Nevertheless, if a user of the present device would like to select a part of the CFOV, thus examine a preselected partial focus volume, e.g. on the basis of previous examinations such as a general scan with all of the detection device, all he need do is close the superfluous pinholes. In this way, a very versatile detection device is provided, still without the need to rotate the collimator. It is noted that rotating the collimator is of course still possible, even though often not required. Furthermore, it becomes possible to combine the data of such a partial scan, i.e. of a selected part of the CFOV, with those of a complete scan of all of the CFOV, in order to solve a possible interior problem, e.g. by using the data in an iterative image reconstruction algorithm. It is furthermore in all embodiments possible to combine imaging with different pinhole transmission states with movements of the object, on its bed, and/or of the collimator. This allows more angle information and/or the scanning of an object that is larger than the useful total field of view. It also allows to image a region of interest with full angle information, while merely scanning its environment. This not only reduces artefacts in the image of the region of interest, but also conversely allows to prescan the object to determine said region of interest.

In favourable embodiments, the pinhole systems are regularly distributed in one or more circles or regular polygons around the object space, e.g. in a cilindrical or tubular collimator. Such a regular distribution greatly simplifies image processing. In particular, the collimator has a distribution of pinhole systems as a number of staggered rings, such as 5 rings of 15 pinhole systems each, cfr. the USPECT-I and II with 75 individual pinholes, arranged as five rings with 15 pinholes each. Note that a large number of pinhole systems allows also to focus on two different parts of the total focus volume. This may be useful in monitoring simultaneous processes and their connection.

As has been mentioned above, the present invention builds upon the device presented in EP2073039. However, for a better understanding of the present invention, some background, as well as expedient measures, are given below.

One could say that each pinhole of a cluster, which expression "cluster" will be used throughout this text as an synonym to 'pinhole system having a plurality of pinholes', can be made with a smaller acceptance or opening angle than a simple pinhole. Thus, image definition can be improved. However, since each cluster as a whole samples, or images, a similar volume as one corresponding original simple pinhole, the device need not have a smaller CFOV or larger dimensions.

In this application, and as generally understood in the art, a field of view of a pinhole corresponds to a solid angle that is imageable by the pinhole, in other words the part of three-dimensional space that can be seen by the detector through the pinhole. Then, a pinhole system field of view is composed of the fields of view of the plurality of pinholes of the pinhole system, and is thus the part of 3D space that can be seen by the detector through at least one of the pinholes of the pinhole system.

The central field of view (CFOV) can be defined as the volume of the space that can be seen by all pinhole systems (of the collimator) as a whole, i.e. the overlap of all system fields of view. And just as, in conventional pinhole systems, at least two pinholes with their individual fields of view are required to define a CFOV or focus volume, in the present invention a plurality of pinhole systems is required to define a CFOV or focus volume.

Herein, the expression "at least one pinhole system is arranged and constructed such that, for at least one of, and preferably each of, the pinholes of said pinhole system, a portion of the focus volume is outside the field of view of said pinhole" relates to the following. The focus volume, i.e. central field of view, is, in prior art devices, the volume as seen by each individual simple pinhole.
Of course, it might happen that, due to production tolerance or the like, some pinhole does not "see" exactly the same (focus) volume. However, this is still in contrast with the present invention, where each pinhole in a cluster should have a field of view that does not "see" all of the focus volume as defined for all clusters, i.e. it is constructed and arranged not to see all of the focus volume.

Note also that the central lines of pinholes in a cluster are non-parallel. This not only leads to a total focus volume for the clusters being larger than could be obtained for parallel central lines, but it also makes it possible to design the system such that individual images do not overlap on the detector. As mentioned above, it is possible to select very large opening angles for the pinhole system, often leading to overlapping images. Selecting parts of the pinholes overcomes this.

The central line corresponds to the line of maximum transmission, and is often roughly equal to, i.e. approximated by, a line of geometrical symmetry of the cones leading to the pinhole smallest opening. More in particular, in embodiments, a point of closest approximation of at least one set of central lines of two pinholes in a pinhole system is outside a centre of gravity of the focus volume. Herein, a point of closest approximation may be the centre of the shortest line segment connecting the two central, in the case of non-crossing lines, and may be the point of crossing for crossing lines.

The centre of gravity is the centre of the CFOV, in particular the geometrical centre, and may be determined as the physical centre of gravity of a corresponding homogeneous body. Preferably, the point of closest approximation is closer to an outer surface of said focus volume than to said centre of gravity of the focus volume. By positioning the point of closest approximation (POCA) outside the centre, it is ensured that the individual fields of view are aimed at different parts of the CFOV. The position of the POCA for each set of two pinholes depends on a number of factors, such as the desired magnification and the number of pinholes in a pinhole system.

In particular embodiments, for at least one set of two pinholes in a pinhole system, the point of closest approximation lies outside the focus volume. In embodiments, said POCA lies between the collimator and the centre of gravity, in particular between the collimator and the focus volume. In the case of such positioning of the central lines, it is possible to have a good magnification with very closely spaced pinholes in a cluster. However, it is still possible that the central lines of two pinholes in a cluster have a POCA outside the centre of gravity of the focus volume, or even outside the focus volume altogether, and on the other side. In this case, however, the pinholes in the cluster are at a larger relative mutual distance.

Expressed in exemplary numbers, though not intended to be limiting, one could say that, in a cluster that has n pinholes, the individual field of view of a pinhole, and preferably each pinhole, in a cluster (or pinhole system) sees at least (100/n) percent, but less than 100 percent of the focus volume, depending on the extent of the overlap between the individual fields of view within the cluster. In theory, 100/n percent is possible with exactly complementary fields of view. In practice, some overlap to obtain a complete view will almost always be allowed.

In particular, each pinhole of each pinhole system sees at the most 80 percent, and preferably less than 70 percent, of the focus volume. All this ensures the possibility to provide the individual pinholes with a smaller opening angle and, for the total system, still have the same or similar focus volume and total dimensions. Note, by the way, that this also ensures that, for the overlapping parts of individual fields of view, the total sensitivity is increased, by a factor roughly equal to the number of overlapping individual fields of view in a cluster.

In particular, for a cluster of 2 pinholes, the individual field of view of each pinhole in said cluster sees, i.e. overlaps, more than 50 percent but at the most 80 percent of the CFOV. In a cluster of 4 pinholes, in particular in a regular two-by-two configuration, the individual field of view of each pinhole in said cluster sees more than 25 percent but at the most 70 percent of the CFOV. Corresponding figures for different pinhole numbers in a cluster may easily be determined. The above numbers allow a sufficient gain in image definition, by decreasing edge penetration.

In the present context, "mutual distance" between the pinholes relates of course to the smallest, or nearest neighbour distance between pinholes in a pinhole system.

Furthermore, in the present invention, the information is distributed over possibly more pinholes, and thus more images on the detector, than in prior art devices. Since an image of the focus volume is composed of a plurality of partial images, additional calculations are needed to produce an image, and subsequently a reconstruction, of the object to be examined. However, these additional calculations are rather straightforward, especially if the partial images on the detector(s) are mutually substantially separated, i.e. show at the most 10 percent overlap on the detector, and more preferably no overlap. This latter situation is preferable, although in no way deemed to be a limitation of the present invention, since the invention aims, amongst others, at actually overcoming image overlap if present.

The present device is suitable for use with gamma radiation. Such high energy radiation offers a useful range of radiation, having high penetration power. In general, a higher photon energy offers more penetration power. Thus, this radiation may come from deeper in the object, such as the body of an animal or human being, without being attenuated too much. However, this increased penetration power also holds for the imaging device, and thus leads to image blurring. Furthermore, different gamma tracers that are injected or otherwise introduced into the animal or object may have different photon energies, and sometimes a specific tracer is required to examine a specific organ or process in a body, which tracer may happen to have a high photon energy. Then, according to the present invention, it is useful if images from such higher energy radiation may be obtained at a higher resolution than for conventional gamma detection devices. An extremely useful energy is 511 keV, produced by electron-positron annihilation. Many tracers with unique applications provide such radiation, which has, however, such a high energy that this poses problems for prior art detection devices that rely on collimators. The present invention provides a particularly useful solution for detection problems with this radiation, although of course other energy ranges are mentioned here as well. The penetration problems are not only dependent on the absolute photon energy, but also on the relative dimensions of the device. For example, for miniaturized devices, radiation energies as low as 30 keV could already lead to some image blurring. Thus, the invention is deemed to provide advantageous results for gamma photon energies of at least 30 keV.

Note that the present invention, though very useful for gamma radiation due to its effectiev prevention of edge blurring, is not limited to this type of radiation, and be used with any tissue penetrating high-energy radiation, such as X-rays. Therefore, throughout the present application, an instance of "gamma" may be replaced by "X-rays".

According to the present invention, there are at least two pinholes in a cluster. Preferably, however, a pinhole system, or cluster, comprises at least three pinholes arranged on a polygon. Advantageously, the pinholes are arranged rotationally symmetrically on said polygon. Having at least three pinholes allows a favourable distribution of the focus volume over individual fields of view in the cluster. It is also possible to provide more pinholes in such a cluster, such as four, five or six, in each case arranged on a regular square, pentagon, hexagon, respectively, or five, six or seven pinholes with in each case one pinhole within a regular square, pentagon, or hexagon, respectively. Other arrangements, such as irregular polygons are of course possible.

In embodiments, a pinhole system comprises a regular lattice of at least 2 x 2 pinholes, and at most 4 x 4 pinholes. Such embodiments allow relatively easy calculations, through their regular arrangement. The 2 x 2 lattice of course corresponds to the above-mentioned square arrangement, and is a very attractive arrangement with a good compromise between complexity and advantage in image quality. While higher numbers should not be excluded, they tend to be much more complex to produce, while showing only minor improvements in penetration resistance and image sharpness.

In possible embodiments of the invention, the total opening angle of an individual, preferable each, pinhole is from 5 to 40 degrees, preferably from 10 to 35 degrees, in each case inclusive. These ranges have turned out to be useful as regards sufficiently large field of view, and hence magnification, resolving power and dimensions, on the one hand, and sufficient radiation hardness on the other. In this context, the total opening angle relates to the full opening angle of the cones leading to the pinhole, which could in theory be more than 90 degrees, and not to the maximum angle with the central line, which is by definition smaller than 90 degrees. Furthermore, it is advantageous when the limiting opening angle of a pinhole system, i.e. the opening angle of the total field of view as seen at great distance, is not more than about 60 degrees. This means that, preferably, the opening angle of an individual pinhole in a cluster of n pinholes need not be larger than about 60 degrees/sqrt(n) and allowing for some overlap of the cones in the focus volume.

In other embodiments, the total opening angle of the pinhole system is larger, up to 120 degrees. This allows to position the collimator very close to the object to be imaged. This is advantageous for the resolution and sensitivity. Herein, use is made of the fact that in a cluster, the individual pinholes have smaller opening angles.

In preferred embodiments, an angle between central lines of neighbouring pinholes in a pinhole system is larger than zero degrees but smaller than their opening angle. This ensures that overlap between their respective fields of view is possible. Note that non-neighbouring pinholes in a pinhole system need not have overlapping fields of view.

Preferably, the central lines of the pinholes in a pinhole system are arranged regularly. E.g., in a ring collimator with 2 x 2 pinhole systems arranged on a circle, the central lines of the pinholes in each pinhole system preferably subtend equal angles with respect to the normal to the collimator surface, taken in the centre of the pinhole system. All this may be correspondingly adapted in focused pinhole systems with pinhole systems in more than one ring, etc.

In preferred embodiments, the central lines of two neighbouring pinholes in a pinhole system have a point of closest approximation that is between the collimator and the focus volume. Herein, it is easier to create overlapping fields of view in the focus volume but also non-overlapping images on the detector, although such overlap on the detector is not necessarily excluded.

In advantageous embodiments, the collimator has at least four pinhole systems, preferably at least ten pinhole systems. This ensures not only sufficient angle information and sensitivity of the device, but also a limited complexity. The possible number of pinhole systems is of course not limited, and could for example be 75, cfr. the prior art devices USPECT-I and II with 75 individual pinholes, arranged as five rings with 15 pinholes each.

In some embodiments, the collimator has a collimator body formed as a ring or section of a ring, which allows as much as possible a symmetric design with equivalent pinhole systems.

Also possible is a collimator body is constructed of a plurality of ring parts or flat plates, connected to form a circumferential collimator body, such as a polyhedron. Each such ring part or plate has at least one pinhole system. Herein, a ring part may be a part of a cylinder, but could also have any other curved shape.

In the above, a collimator can comprise a plurality of parts, either connected or not.

The device can be equipped with controllable drive means for imparting a motion to the collimator (or the collimator and the detector together), e.g. which allow the collimator or collimator plus detector to be rotatable around an axis, preferably a symmetry axis of the collimator, e.g. of a cilindrical or tubular collimator, which in that case of course has to have symmetry of its own, such as a rotational symmetry. This rotatability allows sufficient angle information to be obtained. Preferably, especially in the case of a collimator that does not extend around the object space in a complete circle, e.g. in a semi-circular collimator, the collimator is rotatable over at least 180 degrees, more preferably over at least 180 degrees plus the full opening angle of a pinhole system. In some cases, such half-circle rotation is not necessary, such as for sparse objects.

Note that further details, such as of a movability of the object carrier, graphical user interfaces, additional so-called framing plates between the collimator and the detector, and so on, are generally known in the art and may be included where desired. Details may be found in e.g. prior patent devices and applications by the applicant, such as the already mentioned USPECT II and WO2007/105942, and US 7,145,153.

Advantageously, two or more, and preferably all, of the pinholes of a pinhole system are provided in a monolithic body of a material with low radiation penetration, such as tungsten, iridium, gold, platinum or depleted uranium. This offers the possibility of providing the pinhole system each in a separate body that is to be mounted in a collimator body, that itself could be made of a different material, e.g. lead or the like. This offers a cost reduction, but also flexibility, in that bodies with such pinhole systems or pinhole apertures may be exchanged for other pinhole systems or apertures. Of course, it is still possible to provide the pinholes in the collimator body itself, the complete collimator then being a unitary body.

Particularly advantageous devices according to the invention are a single photon emission computed tomography scanner, or so-called SPECT scanner, and a positron emission tomography scanner, or PET scanner. A PET scanner uses the fact that, when a positron electron pair is annihilated, two 511 keV photons traveling in opposite directions are emitted simultaneously. Then, by locating two photons on the detector within a small time frame, the line at which annihilation took place can be found, which provides the conditions of mapping the tracer. However, one can also use each of the photons as separate, single photon events, by including a collimator according to the invention, in fact turning the PET scanner into scanner according to the SPECT principle, but suitable for imaging isotopes as normally used in "co-incidence" PET.

The invention also relates to a method wherein use is made of a detection device according to the invention, in imaging an object to be examined, to which object a gamma tracer, in particular having a photon energy of at least 30 keV, preferably at the most 511 keV, has been provided. In this use, or method, an object to be examined, such as an animal or a human, is provided with a gamma tracer that emits high energy photons, such as for example 511 keV photons. The object is positioned on the object carrier in the object space, and one or more images are formed with the detection device, e.g. in manners as disclosed herein.

The invention will now be explained by means of non-limiting embodiments, with reference to the drawings in which:
- Fig. 1 schematically shows a prior art detection device, in cross-sectional view;
- Fig. 2 diagrammatically shows a pinhole system or 'cluster' as used in the present invention, in a cross-sectional view;
- Fig. 3 schematically shows an example of a part of a collimator;
- Figs 4a, 4b and 4c show some examples of other arrangements of individual pinholes in a cluster; and
- Fig. 5 schematically shows a detection device according to the invention,
- Figure 6 diagrammatically shows an embodiment in which a shutter device closes off selected pinholes; and
- Figures 7a, b diagrammatically show a shutter device for selectively closing one or more pinholes.

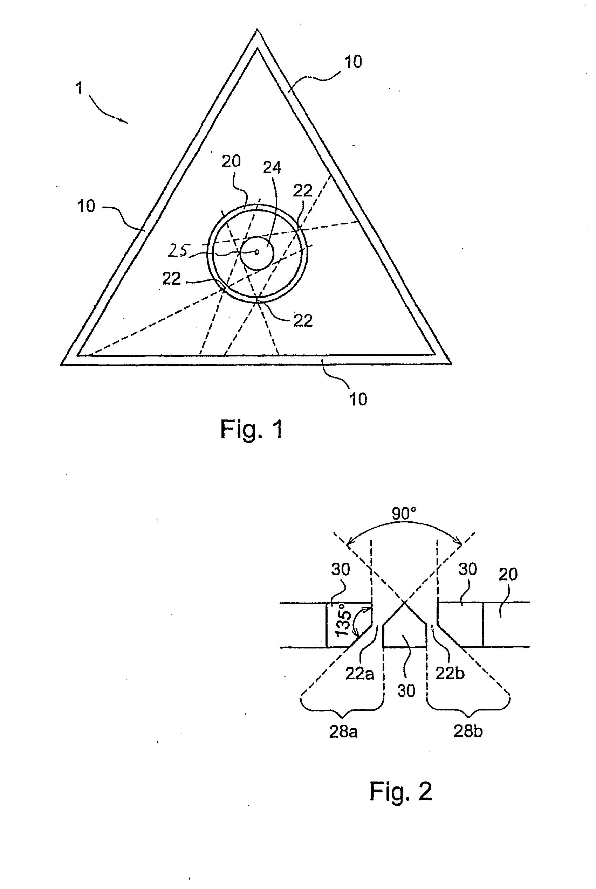

Figure 1 schematically shows a prior art detection device 1, in cross-sectional view. Herein, there are provided three detectors, in a triangular housing, as well as a collimator with pinholes, only three of which are shown here.

The fields of view of the pinholes, indicated by dashed lines, define a central field of view, depicted here as a central circle 24.

This is a very general layout as might be used for e.g. a SPECT scanner. The number of pinholes is freely selectable, and may reach numbers as high as 75 in the USPECT-I and II by Milabs B.V. Very strictly speaking, the central field of view (CFOV), which is the volume that is seen by all of the pinholes 22, is a polygonal volume. However, it is limited by a circular volume. If the collimator 20 is made rotatable, the central field of view 24 becomes an exact circle. Within the CFOV, high quality images of an object may be obtained. Note that other arrangements, such as four detectors 10 in a square, or a single plate detector that is moveable, in particular rotatable around an axis through the CFOV 24, are also possible.

The detectors 10 may be made of e.g. scintillator material, known per se, photomultipliers, and so on, or combinations. Their sensitivity may be selected as desired, but for the present invention, the sensitivity should be sufficiently high at gamma photon energies of about 30 keV or higher, up to about 511 keV, although higher energies are not excluded.

In the prior art detection device of Fig. 1, each pinhole 22 "sees" all of the CFOV 24. Thereto, it has relatively large opening angle, of about 50 degrees . The central lines of the pinholes all point towards the centre 25 (of gravity of) the focus volume 24.

Fig. 2 diagrammatically shows a pinhole system or'cluster' as used in the present invention, in a cross-sectional view. It shows a cluster of two neighbouring pinholes 22a and 22b. Here, the opening angle of the total pinhole system is 90 degrees, but the field of view of the pinhole system is composed of the fields of view of the two pinholes 22a and 22b, each providing about half of it. This allows the knife edge to be 135 degrees, which greatly improves its resistance against radiation penetration. Note furthermore that the images on the detector, deriving from cones 28a and 28b, do not overlap (in this embodiment). No overlap of the images is the preferred embodiment, but as explained herein an overlap may be present.

Furthermore, the fields of view show some overlap in the middle, which slightly increases sensitivity. Moreover, it is possible to allow a smaller or larger overlap of the fields of view, by tilting the cones of the pinholes a bit less or more towards each other, respectively. Also, other opening angles may also be used.

Note that in the case of Fig. 2, and assuming circular pinholes 22a, 22b, the field of view in the direction perpendicular to the plane of the paper is halved. Of course, in reality, an array of 2 x 2 pinholes could be used. Furthermore, it is important to note that such cluster of pinholes may serve in the same way as each pinhole 22 in Fig. 1, i.e. each cluster as a whole is then focused on the CFOV. This also means that the central lines 23a and 23b of the pinholes 22a and 22b cross at a POCA, which will be rather close to the collimator 20, and well before the CFOV as would be present if 22a and 22b would be the pinholes of Figure 1. Note that, contrarily, the central lines of the fields of view of the pinholes 22 according to the prior art, are all directed towards the centre 25 (of gravity of) the CFOV 24 in that Figure.

Moreover, there has been indicated that the pinholes 22a and 22b are provided in a separate and exchangeable part 30. Although apparently being built up of three separate parts, in reality it could be unitary. This part 30 may be made of a material that is different from that of the main body of the collimator 20. Usually, the collimator 20 may be made of a material with good but not extreme stopping power, and often rather low cost, such as lead or tungsten. The material of the part wherein the pinholes 22a and 22b are made, thus of part 30, may then be a high stopping power material, such as gold, platinum, iridium or uranium. Often, these materials are much more expensive or poisonous, and should be used as little as possible.

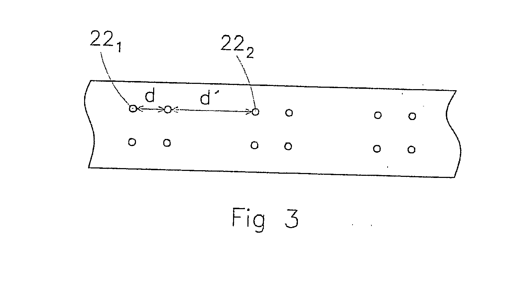

Fig. 3 schematically shows an example of a part of a collimator 20 with three such clusters, each with a 2 x 2 array of pinholes. The distance d between the pinholes 221 in the leftmost pinholes is smaller than the distance d' between the pinholes 221 of the leftmost cluster and the pinholes 222 of the middle cluster.

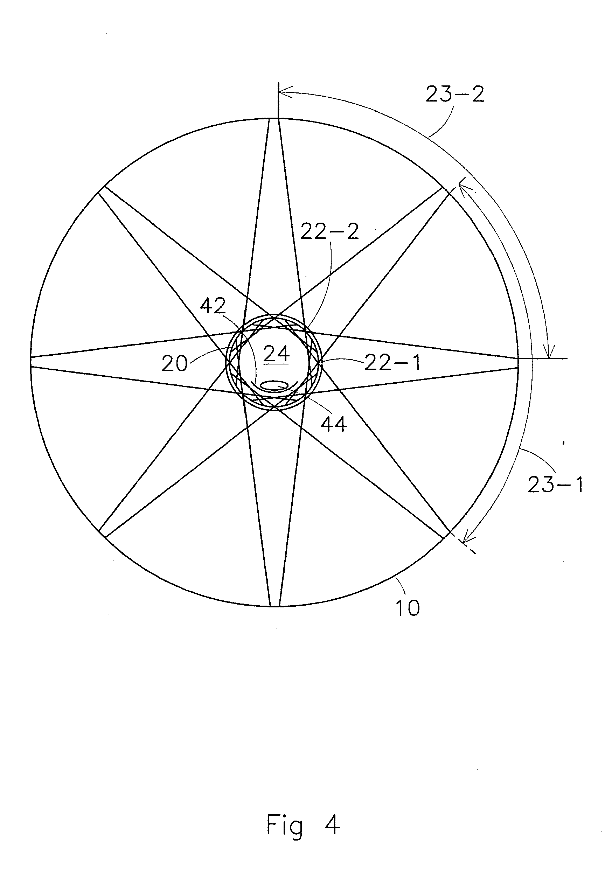

Fig. 4 schematically shows a detection device according to the invention, in cross-sectional side elevational view, with a detector 10, a collimator 20 and an object carrier 42, carrying an object 44.

In this example it is illustrated that the detector 10 and the collimator 20 are circular. Other tubular designs, e.g. a polygonal cross-section design, of the collimator and/or detector are also envisaged. Also other designs, e.g. semi-circular or planar, of the collimator and/or detector are envisaged.

If desired the detector 10 and/or collimator 20 can be supported by a frame of the device in a rotatable manner, preferably about a horizontal axis through the object space, e,g, by a drive means, e.g. a computer controlled electronic drive means. In an embodiment the detector and collimator can be arranged to rotate as a unit relative to the frame by means of a drive means not shown here.

It is illustrated by way of example that the collimator 20 has eight pinhole systems, 22-1, 22-2, .... Of each system, the system field of view is shown, which together form the CFOV 24. Note that each image onto the detector 10 of the object space through a pinhole system overlaps with its direct neighbours, as shown for systems 22-1 and 22-2 showing images 23-1 and 23-2, respectively. These are shown to overlap almost 50%, if both pinhole systems have an unimpeded view.
It is clear that in this exemplary embodiment, the pinhole systems 22 are provided with a very large total opening angle, leading to very close positioning and to a large magnification factor and a high sensitivity. The large opening angle can be obtained without image blurring for high energy radiation through the use of cluster pinhole systems. Furthermore, the CFOV 24 covers a very large part of the object space, due to the large opening angle of the pinhole systems. Thereby, a very quick overall image of the object 44 on object carrier 42 can be obtained. As can be seen, the object 44 occupies only a small part of the COV. Note that in practice it is often expedient to choose a smaller opening angle, and thus a relatively smaller CFOV, as compared to the object space, here in principle the space within the collimator 20.

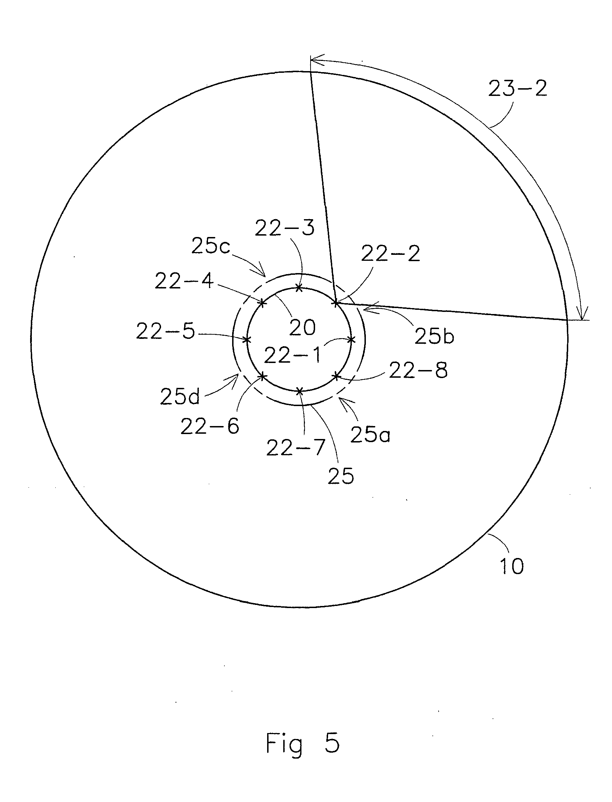

Figure 5 shows the same set-up as Figure 4, now with the eight pinhole systems 22-1 through 22-8 indicated by crosses.

Figure 4 illustrates a shutter device 25 that comprises one ring or a series of rings of gamma-impervious material having openings therein, e.g. four openings, here indicated by dashed lines. In the Figure, the shutter device 25 is positioned by an associated control unit such that pinhole systems 22-1, 22-3, 22-5 and 22-7 are blocked by the shutter 25, while their respective neighbours, i.e. pinhole systems 22-2, 22-4, 22-6 and 22-8 are open and unimpeded. In this way, four non-overlapping images on the detector 10 are obtained, of which only image 23-2 is shown. These non-overlapping images are much easier to process.

Furthermore, it is possible to rotate shutter device 25, in this example here over 45°, such that each previously open pinhole system is now closed, and vice versa. This allows to obtain four additional non-overlapping images, also with a high sensitivity and high resolution (magnification), which in all will almost always allow sufficient angular information to be obtained.

The shutter device 25 may comprise one or more rings of e.g. lead, that are each, preferably independent, rotatable within the image fields of the pinhole systems 22, between the collimator 20 and the detector 10. Each ring may be provided close to the collimator 20 to prevent scattered radiation as much as possible.

Of course, the number of pinhole systems 22 may be larger or smaller, and the shape of the detector 10 may be different, preferably a polygon, such as an octagon, because flat detectors are much easier to produce.

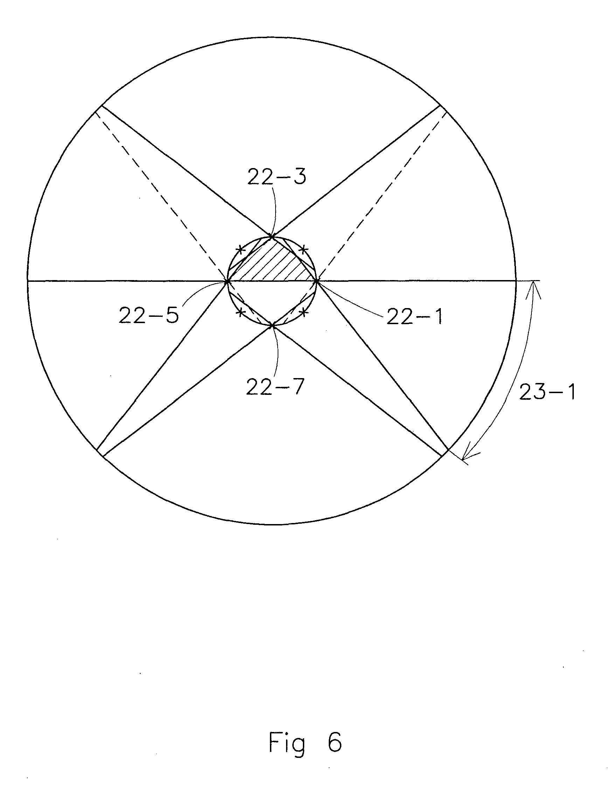

Figure 6 diagrammatically shows an embodiment in which a shutter device (not indicated here) is used to close selected pinholes in a pinhole system, in addition to closing off complete pinhole systems. In this particular case, pinhole systems 22-3 and 22-7 are shown to be unimpeded, pinhole systems 22-1 and 22-5 are shown to be half-impeded by blocking part of their pinholes (discussed below), leaving only the upper half of the original pinhole system field of view. The blocked part of the field of view of these two pinhole systems is indicated with dashed lines. The remaining four pinhole systems are completely blocked. The result is that the CFOV is now reduced to the hatched area, and is imaged in non-overlapping images. Only the partial image 23-1' for the half-open pinhole system 22-1 is shown.
Similarly, by selecting the right pinholes in those four remaining pinhole systems, additional angular information of (roughly) the same CFOV may be obtained with non-overlapping images. This partial area can thus provide more selected information, and may e.g. concentrate on a selected organ or other tissue. This selection could e.g. be based on the previously described quick total scan. It is noted that, when a higher number of pinhole systems is provided, a more regularly shaped partial focus area may be obtained, instead of the rather triangular shape with the embodiment shown in this Figure.

In all, the combination of a shutter device and cluster pinhole systems allows not only to obtain high sensitivity, high resolution images with a high speed and high reliability, because of lack of movement of the collimator proper, but also provides a versatile imaging device, that is able to select areas of interest by selecting the proper pinholes in each pinhole system.

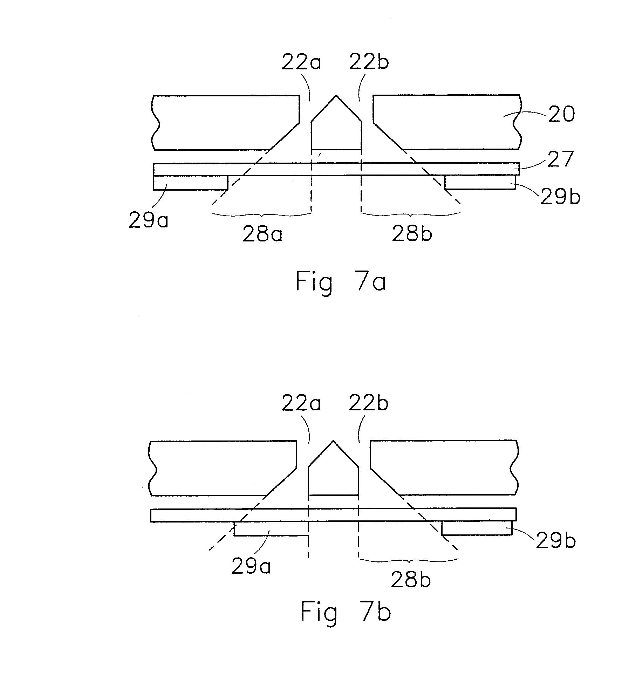

Figures 7a, b diagrammatically show a shutter device for selectively closing one or more of the pinholes 22a, 22b of the pinhole system shown in Figure 2. The shutter device comprises a number of gamma-impervious blocks or bodies 29a, b that can selectively be moved into the (field of view of) one or more pinholes. For example, they can slide or rotate over a transparent plate 27, made of e.g. plastic material, that is preferably arranged between the shutter body or bodies on the one hand and the collimator on the other hand. The plate 27 may extend across the pinholes in the collimator as it is transparent.

In Figure 7a, both blocks or bodies 29a, b are shown in a retracted position, leaving open both pinholes 22a and 22b, with their respective image fields 28a and 28b. In Figure 7b, block 29a has been shifted, by non-shown block shifting actuator means, to thereby switch pinhole 22a from the open state to the closed state, and effectively blocking radiation coming through pinhole 22a.

Because it is only small shutter bodies, e.g. blocks or rings, that need to be moved, this can be done much faster than a multikilogram collimator. Furthermore, as is generally preferred, because the collimator 20 with the pinhole systems 22 remains immoveable with respect to the detector 10, the precision and reliability of the obtained images is not affected by such movements. For example any calibration will remain valid much longer than if the collimator would move, such as rotate. Note furthermore that in the present invention, the image fields never shift over the detector. They are either unimpeded or absent.

The embodiments shown are not intended to be limiting, but rather serve to provide a better understanding of the present inventions, the scope of which is determined by the appended claims.

## Claims

1. A focused pinhole gamma detection device (1), comprising:
- at least one detector (10), having a detector surface and being sensitive to gamma-photons,
- a collimator (20),
- an object carrier (42), arranged to position an object (44) to be examined in an object space,
wherein the collimator (20) is provided between the at least one detector (10) and the object space,
and wherein the collimator (20) has a plurality of pinhole systems (22-1, 22-2...), each pinhole system (22-1, 22-2....) having a plurality of pinholes (22a, 22b) having mutually non-parallel central lines, having a mutual distance d that is smaller than a distance d' between any of the at least two pinholes (22a, 22b) of said pinhole system (22-1, 22-2,...) on the one hand and any pinhole (22a, 22b) of any other pinhole system (22-1, 22-2,...) on the other hand and having a pinhole system field of view, that is composed of the fields of view of the plurality of pinholes (22a, 22b) of the pinhole system,
wherein in the device at least a plurality of, and preferably all, pinhole systems (22-1, 22-2,...) are constructed and arranged so as to establish a common overlap of their pinhole system fields of view, said overlap defining a focus volume (24), that is seen by said plurality of pinhole systems, said all pinhole systems, respectively, of the device, and wherein at least one pinhole system (22-1, 22-2,...) is arranged and constructed such that, for at least one of, and preferably
each of the pinholes (22a, 22b) of said pinhole system (22-1, 22-2,...), a portion of the focus volume (24) is outside the field each of the pinholes (22a, 22b) of said pinhole system (22-1, 22-2), a portion of the focus volume (24) is outside the field of view of said pinhole (22a, 22b),
**characterized in that** the detection device further comprises a pinhole shutter device (25) with a control unit and that is constructed and arranged to selectively switch a transmission state of at least one pinhole (22a, 22b) of at least one pinhole system (22-1, 22-2,...) between an open state and a closed state under the control of the control unit.

2. The detection device according to claim 1, wherein at least two, and preferably all, neighbouring pinhole system (22-1, 22-2,...) have respective pinhole system fields of view that provide images (28a, 28b) that overlap on the detector (10) at least 10%, preferably between about 25% and 75%.

3. The detection device according to claim 1 or 2, wherein the pinhole shutter device (25) is arranged to selectively switch a transmission state of all pinholes (22a, 22b) of at least one pinhole system (22-1, 22-2,...) between an open state and a closed state.

4. The detection device of any preceding claim, wherein the pinhole shutter device (25) is arranged to selectively switch a transmission state of one or more preselected pinholes of a plurality of pinhole systems (22-1, 22-2,...) between an open state and a closed state, preferably such that pinhole system fields of view of neighbouring pinhole systems (22-1, 22-2,...) are at most 20% overlapping in area, preferably at most 10% overlapping in area, more preferably non-overlapping on the detector (10) after the switch.

5. The detection device according to any preceding claim, wherein the pinhole shutter device (25) is arranged to selectively switch a transmission state of at least one pinhole (22a, 22b) of each of the pinhole systems (22-1, 22-2,...) between an open state and a closed state, such that the pinhole system felds of view of all pinholes that are in the open state after said switch together form a predetermined selected partial focus volume, that is smaller than the focus volume (24) of all pinhole systems (22-1, 22-2,...) together in an open state.

6. The detection device according to any preceding claim, wherein each pinhole system (22-1, 22-2,...) comprises a first set of pinholes and a second set of pinholes,
wherein the pinholes of the first sets of the pinhole systems (22-1, 22-2,...) define a first focus volume and the pinholes of the second sets of the pinhole system (22-1, 22-2,...) define a second volume, in particular a second focus volume,
wherein the pinhole shutter device (25) is arranged to selectively switch between a first state, in which the pinholes of the first sets are open, and in which the pinholes of the second sets that are not in the first sets are closed, and a second state, in which the pinholes that are in the second sets are open, and in which the pinholes of the first sets that are not in the second sets are closed.

7. The detection device according to claim 6, wherein the first and second set of at least one pinhole system (22-1, 22-2,...), and preferably all pinhole systems, are mutually exclusive.

8. The detection system according to claim 6 or 7, wherein the control unit is arranged to switch between having the first state during a first time duration and having the second state during a second time duration, wherein the rate of the first time duration and the second time duration is user-definable.

9. The detection system of any of claims 6 - 8, wherein the control unit is arranged to switch the pinhole shutter device (25) repeatedly between the first state and the second state with a predetermined frequency.

10. The detection system according to any of claims 6 - 9, wherein the control unit is arranged to record detector image information obtained in the detector (10) either together with state information for determining whether the recorded detector image information was recorded during the first state or the second state, or together with transmission state information of all switchable pinholes for determining the state of each of the switchable pinholes (22a, 22b) during recording of the recorded detector image information.

11. The detection system of any of claims 6 - 10, wherein each pinhole system (22-1, 22-2,...) comprises at least two different second sets of pinholes.

12. The detection device according to any preceding claim, wherein the total opening angle of at least one, and preferably all, pinhole systems (22-1, 22-2) is more than 50°, in particular more than 60°, more in particular between 80° and 120°, yet more in particular between 90° and 120°.

13. The detection device according to any preceding claim, wherein for a pinhole system (22-1, 22-2,...) having n pinholes (22a, 22b), the individual field of view of a pinhole, and preferably each pinhole, in the pinhole system (22-1, 22-2,...) sees at least (100/n) percent, but less than 100 percent of the focus volume (24).

14. The detection device according to any preceding claim, wherein the pinhole shutter device (25) comprises at least one gamma-impervious body, e.g. embodied as a sheet, a plate, a ring or a series of rings along the length of a cilindrical or tubular collimator, said one or more bodies being arranged to be movable under the control of the control unit and each body having a plurality of holes in a predefined pattern to block preselected pinholes of the collimator (20), in particular the first sets or the second sets according to claim 6, preferably wherein the movable body or bodies are provided within and/or behind the collimator (20) relative to the object space, preferably positioned at a narrowest part of the pinholes (22a, 22b).

15. A method for imaging an object (44) to be examined, wherein use is made of a detection device (1) according to any preceding claim.

## Patentansprüche

1. Gamma-Detektionsvorrichtung (1) mit gerichteter Lochblende, umfassend:
- mindestens einen Detektor (10), welcher eine Detektorfläche aufweist und empfindlich für Gamma-Photonen ist,
- einen Kollimator (20),
- einen Objektträger (42), welcher ausgestaltet ist, ein zu untersuchendes Objekt (44) in einem Objektraum zu positionieren,
wobei der Kollimator (20) zwischen dem mindestens einen Detektor (10) und dem Objektraum vorgesehen ist und wobei der Kollimator (20) mehrere Lochblendensysteme (22-1, 22-2,...) aufweist, wobei jedes Lochblendensystem (22-1, 22-2,...) mehrere Lochblenden (22a, 22b) aufweist, welche gegenseitig nicht parallele Mittellinien aufweisen, welche einen gegenseitigen Abstand d aufweisen, welcher kleiner als ein Abstand d' zwischen einer beliebigen der mindestens zwei Lochblenden (22a, 22b) des Lochblendensystems (22-1, 22-2,...) auf der einen Seite und einer beliebigen Lochblende (22a, 22b) eines beliebigen anderen Lochblendensystems (22-1, 22-2,...) auf der anderen Seite ist, und welche ein Lochblendensystem-Sichtfeld aufweisen, welches aus den Sichtfeldern der mehreren Lochblenden (22a, 22b) des Lochblendensystems zusammengesetzt ist,
wobei in der Vorrichtung zumindest mehrere und vorzugsweise alle Lochblendensysteme (22-1, 22-2,...) konstruiert und angeordnet sind, um eine gemeinsame Überlappung ihrer Lochblendensystem-Sichtfelder einzurichten, wobei die Überlappung ein Fokusvolumen (24) definiert, welches von den mehreren Lochblendensystemen bzw. allen Lochblendensystemen der Vorrichtung gesehen wird, und wobei mindestens ein Lochblendensystem (22-1, 22-2,...) derart angeordnet und konstruiert ist, dass für mindestens eine und vorzugsweise jede Lochblende (22a, 22b) des Lochblendensystems (22-1, 22-2,...) ein Abschnitt des Fokusvolumens (24) außerhalb des Sichtfelds der Lochblende (22a, 22b) ist,
**dadurch gekennzeichnet, dass** die Detektionsvorrichtung ferner eine Lochblendenverschlussvorrichtung (25) mit einer Steuereinheit umfasst und dass diese konstruiert und angeordnet ist, um wahlweise einen Übertragungszustand von mindestens einer Lochblende (22a, 22b) von mindestens einem Lochblendensystem (22-1, 22-2,...) zwischen einem offenen Zustand und einem geschlossenen Zustand unter der Steuerung der Steuereinheit umzuschalten.

2. Detektionsvorrichtung nach Anspruch 1, wobei mindestens zwei und vorzugsweise alle benachbarten Lochblendensysteme (22-1, 22-2,...) entsprechende Lochblendensystem-Sichtfelder aufweisen, welche Bilder (28a, 28b) bereitstellen, welche sich auf dem Detektor (10) um mindestens 10 %, vorzugsweise zwischen näherungsweise 25 % und 75 %, überlappen.

3. Detektionsvorrichtung nach Anspruch 1 oder 2, wobei die Lochblendenverschlussvorrichtung (25) ausgestaltet ist, um einen Übertragungszustand von allen Lochblenden (22a, 22b) von mindestens einem Lochblendensystem (22-1, 22-2,...) zwischen einem offenen Zustand und einem geschlossenen Zustand umzuschalten.

4. Detektionsvorrichtung nach einem der vorhergehenden Ansprüche, wobei die Lochblendenverschlussvorrichtung (25) ausgestaltet ist, einen Übertragungszustand von einer oder mehreren vorausgewählten Lochblenden von mehreren Lochblendensystemen (22-1, 22-2,...) zwischen einem offenen Zustand und einem geschlossenen Zustand vorzugsweise derart umzuschalten, dass nach dem Schalten Lochblendensystem-Sichtfelder von benachbarten Lochblendensystemen (22-1, 22-2,...) auf dem Detektor (10) in der Fläche höchstens 20 % überlappend, vorzugsweise in der Fläche höchstens 10 % überlappend und weiter vorzugsweise nicht überlappend sind.

5. Detektionsvorrichtung nach einem der vorhergehenden Ansprüche, wobei die Lochblendenverschlussvorrichtung (25) ausgestaltet ist, um einen Übertragungszustand von mindestens einer Lochblende (22a, 22b) von jedem der Lochblendensysteme (22-1, 22-2,...) zwischen einem offenen Zustand und einem geschlossenen Zustand wahlweise umzuschalten, sodass die Lochblendensystem-Sichtfelder von allen Lochblenden, welche in dem offenen Zustand sind, nach dem Schalten zusammen ein vorbestimmtes ausgewähltes Teilfokusvolumen bilden, welches kleiner als das Fokusvolumen (24) von allen Lochblendensystemen (22-1, 22-2,...) zusammen in einem offenen Zustand ist.

6. Detektionsvorrichtung nach einem der vorhergehenden Ansprüche, wobei jedes Lochblendensystem (22-1, 22-2,...) eine erste Gruppe von Lochblenden und eine zweite Gruppe von Lochblenden umfasst,
wobei die Lochblenden der ersten Gruppen der Lochblendensysteme (22-1, 22-2,...) ein erstes Fokusvolumen definieren und die Lochblenden der zweiten Gruppen der Lochblendensysteme (22-1, 22-2,...) ein zweites Volumen definieren, insbesondere ein zweites Fokusvolumen,
wobei die Lochblendenverschlussvorrichtung (25) ausgestaltet ist, wahlweise zwischen einem ersten Zustand, in welchem die Lochblenden der ersten Gruppen offen sind und in welchem die Lochblenden der zweiten Gruppen, die nicht in den ersten Gruppen sind, geschlossen sind, und einem zweiten Zustand, in welchem die Lochblenden, welche in den zweiten Gruppen sind, offen sind und in welchem die Lochblenden der ersten Gruppen, welche nicht in den zweiten Gruppen sind, geschlossen sind, umzuschalten.

7. Detektionsvorrichtung nach Anspruch 6, wobei sich die erste und zweite Gruppe von mindestens einem Lochblendensystem (22-1, 22-2,...) und vorzugsweise von allen Lochblendensystemen gegenseitig ausschließen.

8. Detektionsvorrichtung nach Anspruch 6 oder 7, wobei die Steuereinheit ausgestaltet ist, zwischen einem Einnehmen des ersten Zustands während einer ersten Zeitdauer und einem Einnehmen des zweiten Zustands während einer zweiten Zeitdauer umzuschalten, wobei der Anteil der ersten Zeitdauer und der zweiten Zeitdauer benutzerdefinierbar ist.

9. Detektionssystem nach einem der Ansprüche 6-8, wobei die Steuereinheit ausgestaltet ist, die Lochblendenverschlussvorrichtung (25) mit einer vorbestimmten Frequenz wiederholt zwischen dem ersten Zustand und dem zweiten Zustand umzuschalten.

10. Detektionssystem nach einem der Ansprüche 6-9, wobei die Steuereinheit ausgestaltet ist, eine in dem Detektor (10) erhaltene Detektorbildinformation entweder zusammen mit einer Zustandsinformation zum Bestimmen, ob die aufgezeichnete Detektorbildinformation während des ersten Zustands oder des zweiten Zustands aufgezeichnet wurde, oder zusammen mit einer Übertragungszustandsinformation von allen schaltbaren Lochblenden zum Bestimmen des Zustands von jeder der schaltbaren Lochblenden (22a, 22b) während eines Aufzeichnens der aufgezeichneten Detektorbildinformation aufzuzeichnen.

11. Detektionssystem nach einem der Ansprüche 6-10, wobei jedes Lochblendensystem (22-1, 22-2,...) mindestens zwei unterschiedliche zweite Gruppen von Lochblenden umfasst.

12. Detektionsvorrichtung nach einem der vorhergehenden Ansprüche, wobei der gesamte Öffnungswinkel von mindestens einem und vorzugsweise allen Lochblendensystemen (22-1, 22-2,...) mehr als 50° beträgt, insbesondere mehr als 60°, weiter insbesondere zwischen 80° und 120°, noch weiter insbesondere zwischen 90° und 120°.

13. Detektionsvorrichtung nach einem der vorhergehenden Ansprüche, wobei für ein Lochblendensystem (22-1, 22-2,...) mit n Lochblenden (22a, 22b) das individuelle Sichtfeld einer Lochblende und vorzugsweise jeder Lochblende in dem Lochblendensystem (22-1, 22-2,...) zumindest (100/n) Prozent, aber weniger als 100 Prozent des Fokusvolumens (24) sieht.

14. Detektionsvorrichtung nach einem der vorhergehenden Ansprüche, wobei die Lochblendenverschlussvorrichtung (25) einen gamma-undurchlässigen Körper umfasst, z.B. ausgebildet als eine Schicht, eine Platte, einen Ring oder eine Reihe von Ringen entlang der Länge eines zylindrischen oder röhrenförmigen Kollimators, wobei der eine oder die mehreren Körper ausgestaltet sind, um unter der Steuerung der Steuereinheit beweglich zu sein, und wobei jeder Körper mehrere Löcher in einem vorbestimmten Muster aufweist, um ausgewählte Lochblenden des Kollimators (20) zu blockieren, insbesondere die ersten Gruppen oder die zweiten Gruppen nach Anspruch 6, wobei insbesondere der bewegliche Körper oder die beweglichen Körper innerhalb und/oder hinter dem Kollimator (20) relativ zu dem Objektraum vorgesehen sind, vorzugsweise an einem nächsten Teil der Lochblenden (22a, 22b) angeordnet sind.

15. Verfahren zum Abbilden eines zu untersuchenden Objekts (44), wobei eine Detektionsvorrichtung (1) nach einem der vorhergehenden Ansprüche verwendet wird.

## Revendications

1. Dispositif de détection de rayons gamma à trous sténopéiques focalisés (1), comprenant :
- au moins un détecteur (10), comportant une surface de détection et sensible aux rayons gamma-photons,
- un collimateur (20) ;
- un support d'objet (42) agencé pour positionner un objet (44) à examiner dans un espace d'objet,
dans lequel le collimateur (20) est prévu entre ledit au moins un détecteur (10) et l'espace d'objet, et dans lequel le collimateur (20) comporte une pluralité de systèmes de trous sténopéiques (22-1, 22-2, ...), chaque système de trous sténopéiques (22-1, 22-2, ...) comportant une pluralité de trous sténopéiques (22a, 22b) ayant des lignes centrales mutuellement non parallèles, ayant une distance mutuelle d qui est inférieure à une distance d' entre l'un quelconque desdits au moins deux trous sténopéiques (22a, 22b) dudit système de trous sténopéiques (22-1, 22-2, ...) d'une part et l'un quelconque des trous sténopéiques (22a, 22b) de n'importe quel autre système de trous sténopéiques (22-1, 22-2, ...) d'autre part et ayant un champ de vision de système de trous sténopéiques, qui est composé des champs de vision de la pluralité de trous sténopéiques (22a, 22b) du système de trous sténopéiques,
dans lequel, dans le dispositif, au moins une pluralité, et de préférence la totalité, des systèmes de trous sténopéiques (22-1, 22-2, ...) sont construits et agencés de manière à établir une superposition commune de leurs champs de vision de système de trous sténopéiques, ladite superposition définissant un volume de focalisation (24), qui est vu par ladite pluralité de systèmes de trous sténopéiques, ladite totalité des systèmes de trous sténopéiques, respectivement, du dispositif, et dans lequel au moins un système de trous sténopéiques (22-1, 22-2, ...) est agencé et construit de sorte que, pour au moins l'un, et de préférence pour chacun des trous sténopéiques (22a, 22b) dudit système de trous sténopéiques (22-1, 22-2, ...), une partie du volume de focalisation (24) soit à l'extérieur du champ de vision dudit trou sténopéique (22a, 22b),
**caractérisé en ce que** le dispositif de détection comprend en outre un dispositif d'obturation de trou sténopéique (25) avec une unité de commande et qui est construit et agencé pour commuter de manière sélective un état de transmission d'au moins un trou sténopéique (22a, 22b) d'au moins un système de trous sténopéiques (22-1, 22-2, ...), entre un état ouvert et un état fermé sous la commande de l'unité de commande.

2. Dispositif de détection selon la revendication 1, dans lequel au moins deux, et de préférence la totalité, des systèmes de trous sténopéiques (22-1, 22-2, ...) voisins ont des champs de vision de système de trous sténopéiques respectifs qui fournissent des images (28a, 28b) qui se superposent sur le détecteur (10) d'au moins 10 %, de préférence entre environ 25 % et 75 %.

3. Dispositif de détection selon la revendication 1 ou 2, dans lequel le dispositif d'obturation de trou sténopéique (25) est agencé pour commuter de manière sélective un état de transmission de tous les trous sténopéiques (22a, 22b) d'au moins un système de trous sténopéiques (22-1, 22-2, ...) entre un état ouvert et un état fermé.

4. Dispositif de détection selon l'une quelconque des revendications précédentes, dans lequel le dispositif d'obturation de trou sténopéique (25) est agencé pour commuter de manière sélective un état de transmission d'un ou de plusieurs trous sténopéiques présélectionnés d'une pluralité de systèmes de trous sténopéiques (22-1, 22-2, ...) entre un état ouvert et un état fermé, de préférence de sorte que les champs de vision de système de trous sténopéiques des systèmes de trous sténopéiques (22-1, 22-2, ...) voisins se superposent au plus de 20 % dans une zone, de préférence se superposent au plus de 10 % dans une zone, plus préférablement ne se superposent pas sur le détecteur (10) après le commutateur.

5. Dispositif de détection selon l'une quelconque des revendications précédentes, dans lequel le dispositif d'obturation de trou sténopéique (25) est agencé pour commuter de manière sélective un état de transmission d'au moins un trou sténopéique (22a, 22b) de chacun des systèmes de trous sténopéiques (22-1, 22-2, ...) entre un état ouvert et un état fermé, de sorte que les champs de vision de tous les trous sténopéiques de système de trous sténopéiques qui sont dans l'état ouvert après ledit commutateur forment, ensemble, un volume de focalisation partiel sélectionné prédéterminé, qui est inférieur au volume de focalisation (24) de tous les systèmes de trous sténopéiques (22-1, 22-2, ...) ensemble dans un état ouvert.

6. Dispositif de détection selon l'une quelconque des revendications précédentes, dans lequel chaque système de trous sténopéiques (22-1, 22-2, ...) comprend un premier ensemble de trous sténopéiques et un deuxième ensemble de trous sténopéiques,
dans lequel les trous sténopéiques des premiers ensembles des systèmes de trous sténopéiques (22-1, 22-2, ...) définissent un premier volume de focalisation et les trous sténopéiques des deuxièmes ensembles des systèmes de trous sténopéiques (22-1, 22-2, ...) définissent un deuxième volume, en particulier un deuxième volume de focalisation,
dans lequel le dispositif d'obturation de trou sténopéique (25) est agencé pour commuter de manière sélective entre un premier état, dans lequel les trous sténopéiques des premiers ensembles sont ouverts, et dans lequel les trous sténopéiques des deuxièmes ensembles qui ne sont pas dans les premiers ensembles sont fermés, et un deuxième état, dans lequel les trous sténopéiques qui sont dans les deuxièmes ensembles sont ouverts, et dans lequel les trous sténopéiques des premiers ensembles qui ne sont pas dans les deuxièmes ensembles sont fermés.

7. Dispositif de détection selon la revendication 6, dans lequel les premier et deuxième ensembles d'au moins un système de trous sténopéiques (22-1, 22-2, ...), et de préférence de la totalité des systèmes de trous sténopéiques, sont mutuellement exclusifs.

8. Système de détection selon la revendication 6 ou 7, dans lequel l'unité de commande est agencée pour commuter entre l'adoption du premier état pendant une première durée et l'adoption du deuxième état pendant une deuxième durée, dans lequel le rapport entre la première durée et la deuxième durée peut être défini par l'utilisateur.

9. Système de détection selon l'une quelconque des revendications 6 à 8, dans lequel l'unité de commande est agencée pour commuter le dispositif d'obturation de trou sténopéique (25) de manière répétée entre le premier état et le deuxième état avec une fréquence prédéterminée.

10. Système de détection selon l'une quelconque des revendications 6 à 9, dans lequel l'unité de commande est agencée pour enregistrer des informations d'image de détecteur obtenues dans le détecteur (10) soit avec des informations d'état pour déterminer si les informations d'image de détecteur enregistrées ont été enregistrées pendant le premier état ou le deuxième état, ou avec des informations d'état de transmission de tous les trous sténopéiques pouvant être commutés pour déterminer l'état de chacun des trous sténopéiques (22a, 22b) pouvant être commutés pendant l'enregistrement des informations d'image de détecteur enregistrées.

11. Système de détection selon l'une quelconque des revendications 6 à 10, dans lequel chaque système de trous sténopéiques (22-1, 22-2, ...) comprend au moins deux deuxièmes ensembles différents de trous sténopéiques.

12. Dispositif de détection selon l'une quelconque des revendications précédentes, dans lequel l'angle d'ouverture total d'au moins un, et de préférence de la totalité des systèmes de trous sténopéiques (22-1, 22-2, ...) est supérieur à 50°, en particulier supérieur à 60°, plus particulièrement entre 80° et 120°, encore plus particulièrement entre 90° et 120°.

13. Dispositif de détection selon l'une quelconque des revendications précédentes, dans lequel, pour un système de trous sténopéiques (22-1, 22-2, ...) comportant n trous sténopéiques (22a, 22b), le champ de vision individuel d'un trou sténopéique, et de préférence de chaque trou sténopéique, dans le système de trous sténopéiques (22-1, 22-2, ...) voit au moins (100/n) pourcent, mais moins de 100 pourcent du volume de focalisation (24).

14. Dispositif de détection selon l'une quelconque des revendications précédentes, dans lequel le dispositif d'obturation de trou sténopéique (25) comprend au moins un corps imperméable aux rayons gamma, par exemple mis en oeuvre en tant que feuille, plaque, bague ou série de bagues le long de la longueur d'un collimateur cylindrique ou tubulaire, lesdits un ou plusieurs corps étant agencés de manière à pouvoir se déplacer sous la commande de l'unité de commande et chaque corps comportant une pluralité de trous en un motif prédéfini pour bloquer des trous sténopéiques présélectionnés du collimateur (20), en particulier les premiers ensembles ou les deuxièmes ensembles selon la revendication 6, de préférence, dans lequel, le corps ou les corps mobiles sont prévus dans et/ou derrière le collimateur (20) par rapport à l'espace d'objet, de préférence positionnés au niveau d'une partie la plus étroite des trous sténopéiques (22a, 22b).

15. Procédé pour former l'image d'un objet (44) à examiner, dans lequel un dispositif de détection (1) selon l'une quelconque des revendications précédentes est utilisé.
